# EUROPEAN PATENT APPLICATION

(11) **EP 4 725 809 A1**
(43) Date of publication of application: **15.04.2026**
(21) Application number: 25208310.0
(22) Date of filing: 13.10.2025
(51) Int. Cl.: B62D 35/00, B62D 35/02

(54) **ROAD VEHICLE WITH DOWNFORCE WING PROVIDED WITH A DEFLECTOR**

(30) Priority: 14.10.2024 IT 202400022848
(71) Applicant: FERRARI S.p.A., 41100 Modena (IT)
(72) Inventor: SEDDA, Salvatore, 41100 Modena (IT); MILANETTI, Marco, 41100 Modena (IT)
(74) Representative: Studio Torta S.p.A.

(57) **Abstract**

A road vehicle has a support frame (2) delimited, on the lower side, by an aerodynamic bottom (11); a passenger compartment (4); an outer body (5); a front compartment (6) obtained in the outer body (5) and delimited by a front bumper (8) and by a front hood (9); and a downforce wing (23), which is configured to generate a downforce on the road vehicle and is provided with a deflector (32), which is movable, relative to the downforce wing (23), between a rest position, in which the deflector (32) is substantially contained in an airfoil of the downforce wing (23), and an operating position, in which the deflector (32) projects from the downforce wing (23).

## Description

### CROSS-REFERENCE TO RELATED APPLICATIONS

This patent application claims priority from Italian patent application no. 102024000022848 filed on October 14, 2024, the entire disclosure of which is incorporated herein by reference.

### TECHNICAL FIELD

The invention relates to a road vehicle.

### BACKGROUND

In particular, the invention relates to a road vehicle of the kind comprising a support frame defining part of a lower floor of the car; a passenger compartment mounted on the support frame and projecting upwards from the lower floor; an aerodynamic bottom fixed to the support frame and defining part of the lower floor; and an engine for moving the road vehicle.

The road vehicle further comprises a rear wing, which is mounted at the back of the passenger compartment, extends above a rear hood and has an airfoil configured to generate a vertical downward load on the road vehicle and increase its grip to the ground.

Since, from the aerodynamic point of view, the road vehicle is sized as a function of the vertical load necessary to guarantee top performances in cornering driving situations, known road vehicles of the type described above suffer from some drawbacks mainly due to the fact that the presence of the sole rear wing poses limits to aerodynamic quantities also in other driving situations, increasing - on the one hand - aerodynamic drag and worsening - on the other hand - the conditions of stability and drivability of the road vehicle.

### SUMMARY

The object of the invention is to provide a road vehicle that is not affected by the aforementioned drawbacks and can be manufactured in a simple and economic fashion.

According to the invention, there is provided a road vehicle as claimed in the appended claims.

### BRIEF DESCRIPTION OF THE DRAWINGS

The invention will now be described with reference to the accompanying drawings showing a non-limiting embodiment thereof, wherein:
figures 1 and 2 are two schematic perspective views, with parts removed for greater clarity, of a preferred embodiment of the road vehicle according to the invention;
figures 3 and 4 are two schematic perspective views, with parts removed for greater clarity, of a detail of the road vehicle of figures 1 and 2;
figure 5 is a schematic longitudinal section, with parts removed for greater clarity, of the detail of figures 3 and 4; and
figures 6 and 7 are similar to figure 5 and show two variants of a detail of figure 5.

### DESCRIPTION OF EMBODIMENTS

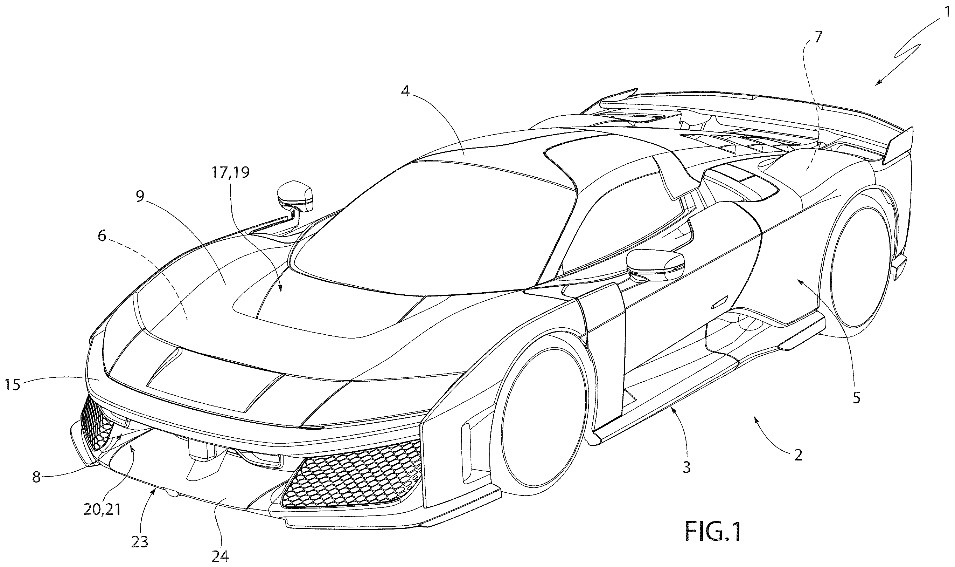

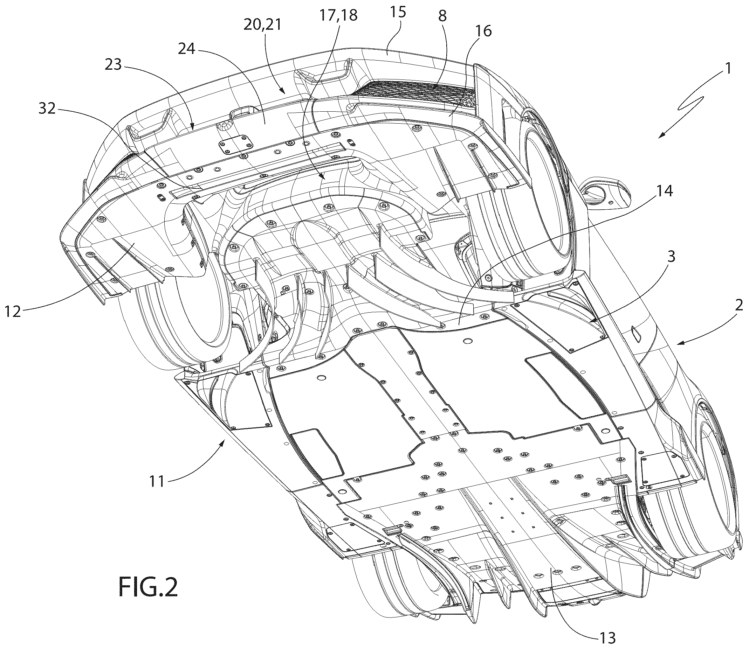

With reference to figures 1 and 2, number 1 indicates, as a whole, a road vehicle comprising a support frame 2 defining at least part of a lower floor 3 of the road vehicle 1, a passenger compartment 4 mounted on the frame 2 and projecting upwards from the floor 3 and an outer body 5.

The road vehicle 1 further comprises a front compartment 6 and a rear compartment 7 obtained within the body 5.

The front compartment 6 is delimited by a front bumper 8 and by a front hood 9 and accommodates, on the inside, a known engine, which is not shown herein, and a front radiator 10 for cooling the engine (not shown).

The road vehicle 1 further comprises an aerodynamic bottom 11, which is fixed to the frame 2, defines part of the floor 3 and comprises, in turn, a front bottom 12, which is mounted in the area of the front compartment 6, a rear bottom 13, which is mounted in the area of the rear compartment 7, and a central bottom 14, which is mounted in the area of the passenger compartment 4.

The bumper 8 comprises an upper shell 15 connected to the hood 9 and a lower shell 16 fixed to the front bottom 12.

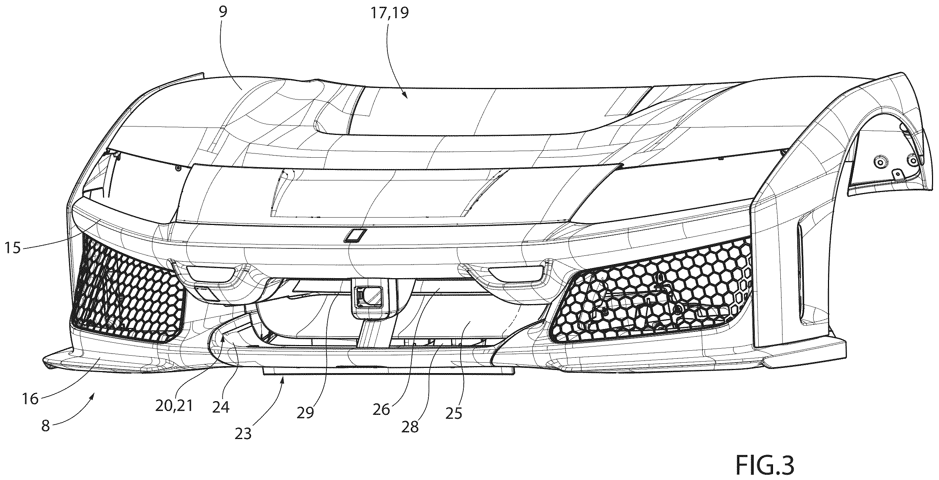

According to figures 1 to 5, the road vehicle 1 further comprises a first duct 17, which is substantially S-shaped and extends between an inlet 18 obtained between the front bottom 12 and the central bottom 14 and an outlet 19 obtained through the hood 9.

The duct 17 cooperates with a second duct 20, which has an inlet 21 obtained through the bumper 8 between the shells 15 and 16, projects into the duct 17 and leads into the first duct 17 so as to have an outlet 22 obtained inside the duct 17.

The duct 20 is delimited, on the lower side, by a front wing 23 configured to generate downforce on the aerodynamic bottom 11.

The wing 23 comprises an inlet element 24, which is defined by the assembly made up of the front bottom 12 and the lower shell 16, and is arranged so as to delimit, together with the upper shell 15, the inlet 21 of the duct 20 and, together with the central bottom 14, the inlet 18 of the duct 17.

The wing 23 further comprises, in this specific case, an intermediate element 25 and an outlet element 26 mounted one after the other and in this order downstream of the element 24 in a flowing direction 27 of the air flow along the duct 20.

The wing 23 finally comprises a first slit 28 defined between the elements 24 and 25 and a second slit 29 defined between the elements 25 and 26.

With reference to what described above, it should be pointed out that:
the slit 28 has a decreasing cross section in a flowing direction of the air flow through the slit 28;
the slit 29 has a decreasing cross section in a flowing direction of the air flow through the slit 29; and
the duct 20 has a decreasing cross section from the inlet 21 to the outlet 22.

When the road vehicle 1 is running, the air flow encountered by the road vehicle 1 is fed both along the upper surface and along the lower surface of the wing 23, whose airfoil allows the air flow to be deflected and conveyed into the duct 17.

The interaction between the airfoil of the wing 23 and the air flow fed along the wing 23 generates a relatively high pressure on the upper surface of the wing 23 and of the aerodynamic bottom 11 and a relatively low pressure on the lower surface of the wing 23 and of the aerodynamic bottom 11 and, therefore, a relatively great downforce, namely aerodynamic load, on the road vehicle 1.

The road vehicle 1 further comprises a third duct 30, which extends between the inlet 21 and an outlet 31 obtained between the bumper 8 and the hood 9 and houses, on the inside, the radiator 10.

The wing 23 is provided with a deflector 32 obtained, in this specific case, on the lower face of the element 24 and at an intermediate point of the element 24.

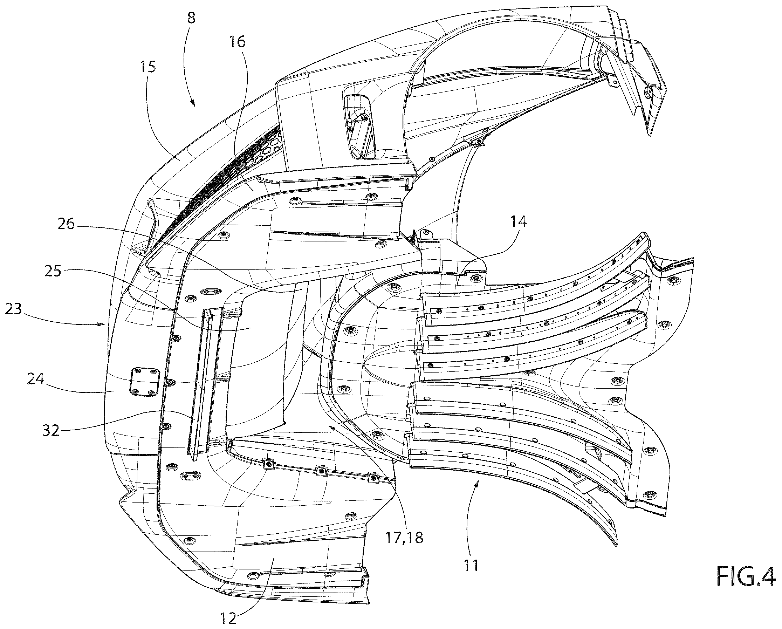

The deflector 32 is movable, relative to the wing 23, between a rest position (figure 2), in this specific case a raised position, in which the deflector 32 is substantially contained in the airfoil of the wing 23, and an operating position (figure 4), in this specific case a lowered position, in which the deflector 32 projects from the wing 23 towards the road surface.

The downforce generated by the wing 23 when the deflector 32 is in its rest position is greater than the downforce generated by the wing 23 when the deflector 32 is in its operating position.

The aerodynamic drag generated by the assembly consisting of the wing 23 and the deflector 32 when the deflector 32 is in its operating position is smaller than the aerodynamic drag generated by the assembly consisting of the wing 23 and the deflector 32 when the deflector 32 is in its rest position.

The presence of the deflector 32 allows the aerodynamic configuration of the road vehicle 1 to be selectively varied based on the driving condition.

The movement of the deflector 32 to its operating position defines a barrier for the air flow fed along the aerodynamic bottom 11 with a consequent reduction in the volume of air fed along the duct 17, in the aerodynamic load and in the aerodynamic drag.

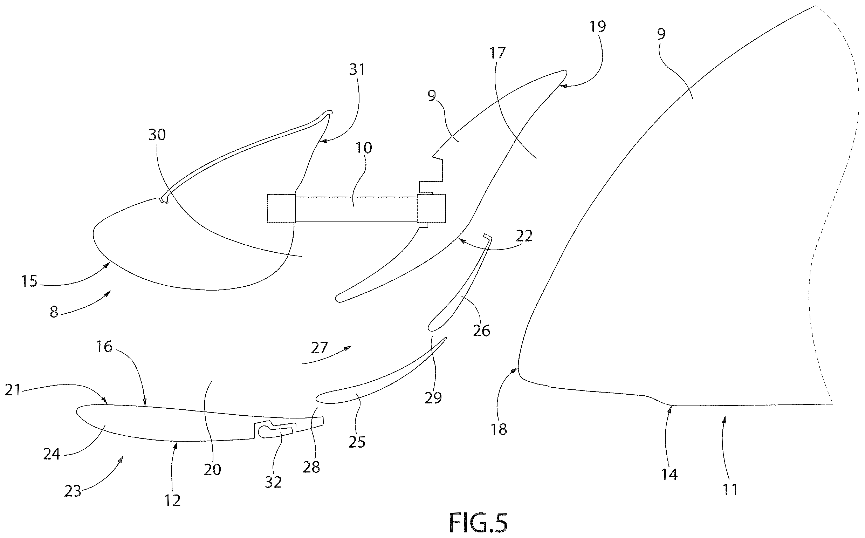

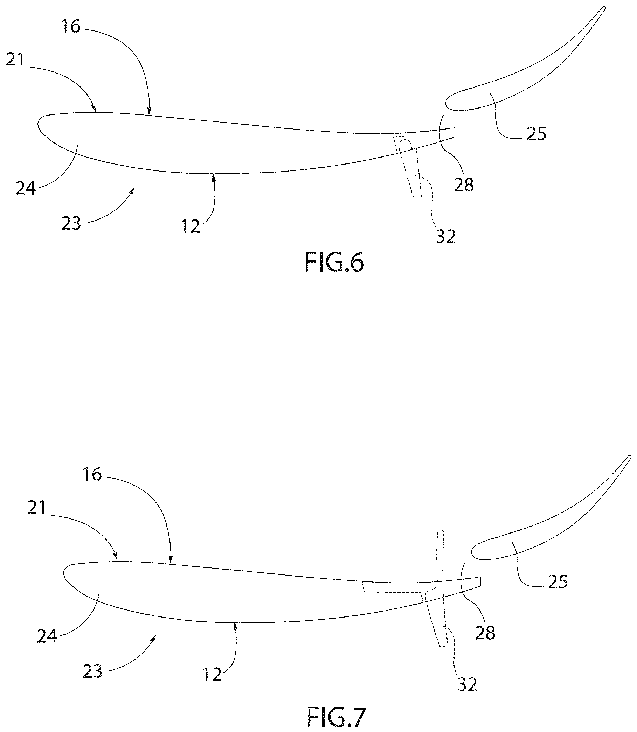

The variant shown in figure 6 differs from the one shown in figure 5 only in that, in it, the deflector 32 is defined by the free end of the element 24 located at the front in the direction 27.

The variant shown in figure 7 differs from the one shown in figure 5 only in that, in it:
the deflector 32 is defined by the free end of the element 24 located at the front in the direction 27;
the deflector 32 has an appendage obtained on an upper face of the element 24; and
the deflector 32, when in its operating position, projects downwards from the wing 23, hindering the flow of air between the wing 23 and the road surface, and projects upwards from the wing 23, hindering the flow of air through the slit 28.

According to a variant which is not shown herein, the deflector 32 is mounted on the lower face of a rear wing mounted on the body 5 at the back of the passenger compartment 4 and is movable between its rest position and its operating position.

## Claims

1. A road vehicle comprising a support frame (2) delimited, on the lower side, by an aerodynamic bottom (11); a passenger compartment (4); an outer body (5); a front compartment (6) obtained in the outer body (5) and delimited by a front bumper (8) and by a front hood (9); and a downforce wing (23) configured to generate a downforce on the road vehicle itself; and **characterized in that** the downforce wing (23) is provided with a deflector (32), which is movable, relative to the downforce wing (23), between a rest position, in which the deflector (32) is substantially contained in an airfoil of the downforce wing (23), and an operating position, in which the deflector (32) projects from the downforce wing (23).

2. The road vehicle according to claim 1, wherein the downforce generated by the downforce wing (23) when the deflector (32) is in its rest position is greater than the downforce generated by the downforce wing (23) when the deflector (32) is in its operating position.

3. The road vehicle according to claim 1 or 2, wherein, when it is in its operating position, the deflector (32) projects from the front wing (23) towards the road surface.

4. The road vehicle according to any one of the preceding claims, wherein the aerodynamic drag generated by the assembly consisting of the downforce wing (23) and the deflector (32) when the deflector (32) is in its operating position is smaller than the aerodynamic drag generated by the assembly consisting of the downforce wing (23) and the deflector (32) when the deflector (32) is in its rest position.

5. The road vehicle according to any one of the preceding claims, wherein the downforce wing (23) is mounted on the outer body (5) behind the passenger compartment (4).

6. The road vehicle according to any one of the claims from 1 to 4 and further comprising a first duct (17) having a first inlet (18) obtained through the aerodynamic bottom (11) and a first outlet (19) obtained through the front hood (9) and a second duct (20), which has a second inlet (21) obtained through the front bumper (8), flows into the first duct (17) so as to have a second outlet (22) obtained inside the first duct (17) and is delimited, on the lower side, by the downforce wing (23).

7. The road vehicle according to claim 6, wherein the aerodynamic bottom (11) comprises a front bottom (12), a rear bottom (13) and a central bottom (14) obtained between the front bottom (12) and the rear bottom (13); the first inlet (18) of the first duct (17) being obtained between the front bottom (12) and the central bottom (14).

8. The road vehicle according to claim 6 or 7, wherein the downforce wing (23) comprises an inlet segment (24) configured to delimit the first inlet (18) of the first duct (17) and the second inlet (21) of the second duct (20).

9. The road vehicle according to claim 8, wherein the front bumper (8) comprises a lower shell (16) defining, together with the front bottom (12), the inlet segment (24) of the downforce wing (23).

10. The road vehicle according to any one of the claims from 6 to 9, wherein the downforce wing (23) comprises at least a first element (24) and a second element (25), which are mounted in succession to one another, and a first slit (28) defined between said first and second elements (24, 25).

11. The road vehicle according to claim 10, wherein the downforce wing (23) comprises a third element (26) mounted downstream of the second element (25) and a second slit (29) defined between said second and third elements (25, 26).

12. The road vehicle according to claim 10 or 11, wherein the deflector (32) is mounted on the first element (24) of the downforce wing (23).
